# EUROPEAN PATENT APPLICATION

(11) **EP 4 529 297 A1**
(43) Date of publication of application: **26.03.2025**
(21) Application number: 24172257.8
(22) Date of filing: 24.04.2024
(51) Int. Cl.: H04W 52/26, H04W 52/28

(54) **POWER MANAGEMENT METHOD, ELECTRONIC DEVICE, AND COMPUTER READABLE STORAGE MEDIUM**

(30) Priority: 25.09.2023 US 202363540111 P; 08.03.2024 US 202418599248
(71) Applicant: HTC Corporation, Taoyuan City 330, (TW)
(72) Inventor: TSAI, Yao-Te, 330 Taoyuan City (TW)
(74) Representative: Klang, Alexander H.

(57) **Abstract**

The embodiments of the disclosure provide a power management method, an electronic device, and a computer readable storage medium. The method includes: obtaining a first communication quality between the first electronic device and a second electronic device; obtaining a first motion data of a reference device among the first electronic device and the second electronic device; and managing a first transmit power of the reference device among the first electronic device and the second electronic device according to the first motion data of the reference device and the first communication quality.

## Description

### CROSS-REFERENCE TO RELATED APPLICATION

This application claims the priority benefit of U.S. provisional application serial no. 63/540,111, filed on September 25, 2023. The entirety of the above-mentioned patent application is hereby incorporated by reference herein and made a part of this specification.

### BACKGROUND

### 1. Field of the Invention

The present disclosure generally relates to a power management method, an electronic device, and a computer readable storage medium.

### 2. Description of Related Art

Nowadays, it is common for people to experience reality services (e.g., virtual reality (VR) service, augmented reality (AR) service, mixed reality (MR) service, etc.) by using head-mounted displays (HMD) and wearable devices (e.g., wearable wrist/ankle/waist trackers, etc).

However, the signals exchanged between the HMD and each of the wearable devices often cause interference to other wearable devices, which degrades the communication quality of the wearable devices. In this case, the motion data detected by each wearable device may not be properly and/or efficiently transmitted to the HMD, such that the user may not be able to accurately interact with the visual content of the reality services.

### SUMMARY OF THE INVENTION

Accordingly, the disclosure is directed to a power management method, an electronic device, and a computer readable storage medium, which may be used to solve the above technical problems.

The embodiments of the disclosure provide power management method, executed by a first electronic device. The method includes: obtaining, by the first electronic device, a first communication quality between the first electronic device and a second electronic device; obtaining, by the first electronic device, a first motion data of a reference device among the first electronic device and the second electronic device; and managing, by the first electronic device, a first transmit power of the reference device among the first electronic device and the second electronic device according to the first motion data of the reference device and the first communication quality.

The embodiments of the disclosure provide a first electronic device, including a storage circuit and a processor. The storage circuit stores a program code. The processor is coupled to the storage circuit and accesses the program code to perform: obtaining a first communication quality between the first electronic device and a second electronic device; obtaining a first motion data of a reference device among the first electronic device and the second electronic device; and managing a first transmit power of the reference device among the first electronic device and the second electronic device according to the first motion data of the reference device and the first communication quality.

The embodiments of the disclosure provide a computer readable storage medium, the computer readable storage medium recording an executable computer program, the executable computer program being loaded by a first electronic device to perform steps of: obtaining a first communication quality between the first electronic device and a second electronic device; obtaining a first motion data of a reference device among the first electronic device and the second electronic device; and managing a first transmit power of the reference device among the first electronic device and the second electronic device according to the first motion data of the reference device and the first communication quality.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1 shows a schematic diagram of a first electronic device and a second electronic device according to an embodiment of the disclosure.
FIG. 2 shows a flow chart of the power management method according to an embodiment of the disclosure.
FIG. 3 shows an application scenario according to the second embodiment of the disclosure.
FIG. 4 shows a schematic diagram of the resulted RSSIs of the electronic devices connected with the first electronic device according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

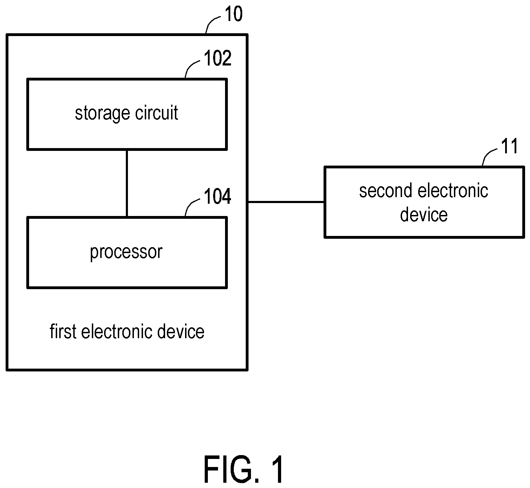

See FIG. 1, which shows a schematic diagram of a first electronic device and a second electronic device according to an embodiment of the disclosure. In various embodiments, the first electronic device 10 and the second electronic device 11 can be implemented as any smart device and/or computer devices. In some embodiments, one of the first electronic device 10 and the second electronic device 11 can be implemented as a host device (e.g., the HMD), and another of the first electronic device 10 and the second electronic device 11 can be one of the reference devices (e.g., wearable devices) connected with the host device.

For example, the first electronic device 10 can be the HMD for providing the visual content (e.g., VR/MR contents) of the corresponding reality services (e.g., VR/MR services), and the second electronic device 11 can be a wearable tracker (e.g., a wearable wrist tracker) connected with the HMD. In this case, when the user is experiencing/interacting, for example, the visual content provided by the HMD worn on the user's head, the user can wear the second electronic device 11 on the corresponding body part (e.g., the wrist), and the second electronic device 11 can provide the motion data corresponding to the movement of the corresponding body part (e.g., the wrist) to the HMD, such that the HMD can accordingly adjust the rendered visual contents, but the disclosure is not limited thereto.

In some embodiments, the motion data can be detected by the motion detection circuit on the considered device (e.g., the first electronic device 10 and/or the second electronic device 11). For example, the motion detection circuit may be an inertia measure unit (IMU), and the corresponding motion data may be the IMU data measured by the IMU, but the disclosure is not limited thereto.

In other embodiments, there may be other reference devices connected with the host device. Taking FIG. 1 as an example, in the embodiment where the first electronic device 10 is the host device, the first electronic device 10 may be connected with other reference devices other than the second electronic device 11, and the other reference devices can be, for example, other wearable trackers (e.g., wearable ankle trackers), but the disclosure is not limited thereto.

In FIG. 1, the storage circuit 102 is one or a combination of a stationary or mobile random access memory (RAM), read-only memory (ROM), flash memory, hard disk, or any other similar device, and which records a plurality of modules and/or a program code that can be executed by the processor 104.

The processor 104 may be coupled with the storage circuit 102, and the processor 104 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

The structure of the second electronic device 11 (and/or other electronic devices mentioned in the following) may have identical/similar structure as the first electronic device 10.

In the embodiments of the disclosure, the processor 104 may access the modules and/or the program code stored in the storage circuit 102 to implement the power management method provided in the disclosure, which would be further discussed in the following.

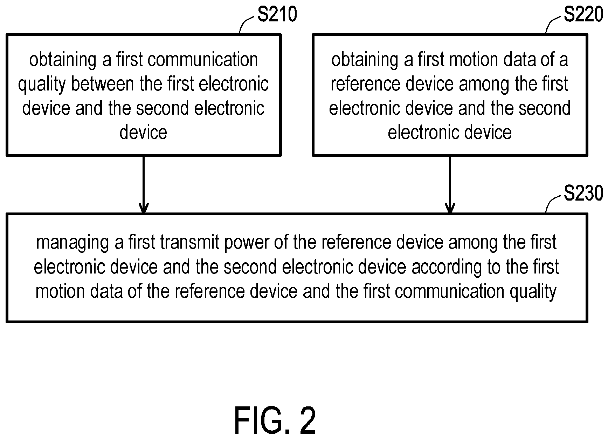

See FIG. 2, which shows a flow chart of the power management method according to an embodiment of the disclosure. The method of this embodiment may be executed by the first electronic device 10 in FIG. 1, and the details of each step in FIG. 2 will be described below with the components shown in FIG. 1.

In step S210, the processor 104 obtains a first communication quality between the first electronic device 10 and the second electronic device 11.

In some embodiments, the first communication quality may be characterized by at least one of a received signal strength indicator (RSSI) and a data drop rate. In other embodiments, the first communication quality may be a statistical value of the RSSI and/or data drop rate in a measurement window, such as an average RSSI and/or an average data drop rate, but the disclosure is not limited thereto.

In one embodiment, the reference device among the first electronic device 10 and the second electronic device 11 can send signals to the host device among the first electronic device 10 and the second electronic device 11, and the host device may measure the RSSI and/or data drop rate associated with the reference device as the first communication quality considered in step S210.

For better understanding, the first electronic device 10 and the second electronic device 11 would be respectively assumed to be the host device and the reference device (e.g., a wearable device) in the following discussions, but the disclosure is not limited thereto.

In this case, the second electronic device 11 (e.g., the wearable wrist tracker) can send signals to the first electronic device 10 (e.g., the HMD), and the first electronic device 10 may measure the RSSI and/or data drop rate of the signals sent from the second electronic device 11 as the first communication quality, but the disclosure is not limited thereto.

In one embodiment, the second electronic device 11 may send the above signals by using a first initial transmit power, and this first initial transmit power may be a predetermined transmit power set by the corresponding manufacturer.

In another embodiment, the processor 104 may determine the first initial transmit power based on the following first and/or second embodiment.

In the first embodiment, before step S210, the processor 104 may further determine the first initial transmit power of the reference device based on a first relative position between the first electronic device 10 and the second electronic device 11.

In the first embodiment, the processor 104 may determine where the reference device is placed. In one embodiment, the processor 104 may provided a user interface for the user to select the position where the reference device is placed. In some embodiments, the reference device can be placed at some particular positions. For example, if the reference device is a wearable device, the wearable device can be worn on a particular body part on the user, but the disclosure is not limited thereto.

In one embodiment, in response to determining that the reference device is placed at a first position, the processor 104 may determine the first initial transmit power based on a first predetermined power corresponding to the first position. In another embodiment, in response to determining that the reference device is placed at a second position, the processor 104 may determine the first initial transmit power based on a second predetermined power corresponding to the second position, wherein a first distance between the first position and the host device is longer than a second distance between the second position and the host device, and the first predetermined power is higher than the second predetermined power.

In the first embodiment, the second electronic device 11 (i.e., the considered reference device) may be a wearable device. In this case, in response to determining that the wearable device is worn on a first body part of the user of the host device, the processor 104 may determine the first initial transmit power based on a first predetermined power corresponding to the first body part. In addition, in response to determining that the wearable device is worn on a second body part of the user of the host device, the processor 104 may determine the first initial transmit power based on a second predetermined power corresponding to the second body part. In the first embodiment, a first distance between the first body part and the host device is longer than a second distance between the second body part and the host device, and the first predetermined power is higher than the second predetermined power.

From another perspective, in response to determining that the second electronic device 11 (e.g., the wearable device) is worn on a body part far away from the first electronic device 10 (e.g., the HMD), the processor 104 may determine the first initial transmit power to be a higher power (e.g., the first predetermined power). On the other hand, in response to determining that the second electronic device 11 (e.g., the wearable device) is worn on a body part nearer to the first electronic device 10 (e.g., the HMD), the processor 104 may determine the first initial transmit power to be a lower power (e.g., the second predetermined power), but the disclosure is not limited thereto.

In the second embodiment, the processor 104 may request the user wearing the wearable device to maintain a predetermined posture for a predetermined duration. In various embodiments, the predetermined posture may be any posture based on the requirements of the designer, such as a neutral standing posture (e.g., standing straight with hands down), but the disclosure is not limited thereto.

Next, the processor 104 may determine a received signal quality associated with the wearable device within the predetermined duration. In one embodiment, the wearable device may use the predetermined transmit power set by the corresponding manufacturer to send some signals, and the processor 104 may accordingly measure the average RSSI within the predetermined duration as the received signal quality, but the disclosure is not limited thereto.

In this case, the processor 104 may determine the first initial transmit power of the wearable device based on the received signal quality, wherein the first initial transmit power is negatively related to the received signal quality associated with the wearable device. That is, the higher the received signal quality, the lower the determined first initial transmit power, and vice versa.

After the first initial transmit power has been determined, the processor 104 may control the reference device to use the first initial transmit power to send signals, and the processor 104 may accordingly obtain the first communication quality in step S210, but the disclosure is not limited thereto.

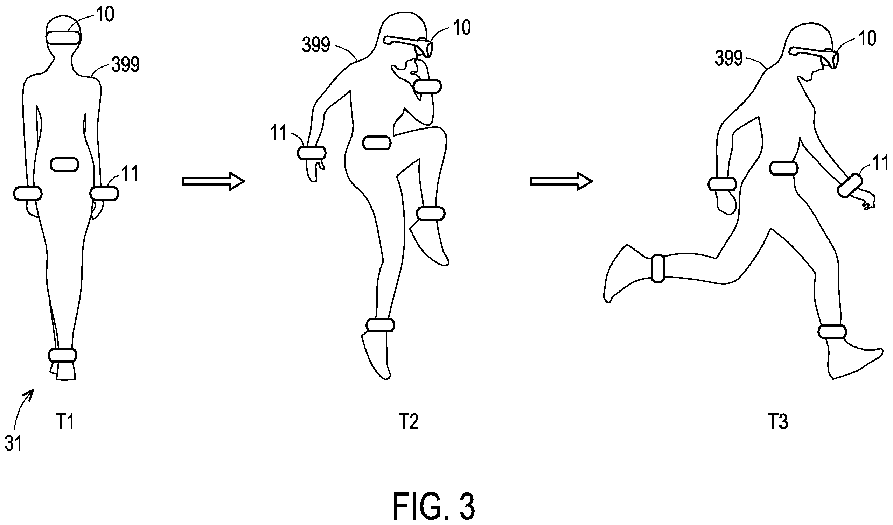

See FIG. 3, which shows an application scenario according to the second embodiment of the disclosure. In FIG. 3, it is assumed that the first electronic device 10 is the HMD and the second electronic device 11 is the wearable device on the wrist of the user 399. In the embodiment, the processor 104 may request the user 399 to maintain the predetermined posture 31 for the predetermined duration T 1.

In this case, the processor 104 may determine the received signal quality (e.g., average RSSI) associated with the wearable device within the predetermined duration T1 and accordingly determine the first initial transmit power of the second electronic device 11 (e.g., the reference device).

Afterwards, the user 399 may normally interact with the visual content provided by the first electronic device 10 in durations T2 and T3, and the processor 104 may determine the first communication quality based on the (average) RSSI and/or data drop rate measured within the durations T2 and/or T3, but the disclosure is not limited thereto.

In step S220, the processor 104 obtains a first motion data of a reference device among the first electronic device 10 and the second electronic device 11.

In the embodiment, the first motion data may be the IMU data detected by the IMU on the considered reference device, but the disclosure is not limited thereto.

In step S230, the processor 104 manages a first transmit power of the reference device among the first electronic device 10 and the second electronic device 11 according to the first motion data of the reference device and the first communication quality.

In a third embodiment, the processor 104 may determine whether the first communication quality is better than a first quality threshold and whether a first variation of the first motion data is lower than a first variation threshold.

In the embodiments of the disclosure, the first quality threshold may be set as a quality that is high enough to define a high communication quality. In the embodiments where the first communication quality is characterized by the RSSI and/or data drop rate, if the RSSI and/or data drop rate indicate that the first communication quality higher than the first quality threshold, the first communication quality may be determined to have a high quality, but the disclosure is not limited thereto.

In addition, the first variation threshold may be set as a variation that is low enough to define a low variation. In one embodiment, the first variation of the first motion data may be characterized by the standard deviation of the first motion data, but the disclosure is not limited thereto. In this case, if the standard deviation of the first motion data indicates that the first variation of the first motion data is lower than the first variation threshold, the first motion data may be determined to have low variation.

In one embodiment, in response to determining that the first communication quality is better than the first quality threshold and the first variation of the first motion data is lower than the first variation threshold, the processor 104 may decrease the first transmit power of the reference device.

That is, if the first communication quality is a high quality and the first motion data has low variation, it may represent that the first transmit power of the reference device may not have to be too high. In this case, the processor 104 may manage the first transmit power of the reference device via decreasing the first transmit power, such that the power consumption of the reference device can be reduced.

In a fourth embodiment, the processor 104 may determine whether the first communication quality is worse than a second quality threshold and whether a first variation of the first motion data is higher than a second variation threshold, wherein the first quality threshold is better than the second quality threshold, and the first variation threshold is lower than the second variation threshold.

In the embodiments of the disclosure, the second quality threshold may be set as a quality that is low enough to define a low communication quality. In the embodiments where the first communication quality is characterized by the RSSI and/or data drop rate, if the RSSI and/or data drop rate indicate that the first communication quality lower than the second quality threshold, the first communication quality may be determined to have a low quality, but the disclosure is not limited thereto.

In addition, the second variation threshold may be set as a variation that is high enough to define a high variation. In the embodiments where the first variation of the first motion data is characterized by the standard deviation of the first motion data, if the standard deviation of the first motion data indicates that the first variation of the first motion data is higher than the second variation threshold, the first motion data may be determined to have high variation.

In one embodiment, in response to determining that the first communication quality is worse than the second quality threshold and the first variation of the first motion data is higher than the second variation threshold, the processor 104 may increase the first transmit power of the reference device.

That is, if the first communication quality is a low quality and the first motion data has high variation, it may represent that the first transmit power of the reference device should be higher to achieve a better communication quality. In this case, the processor 104 may manage the first transmit power of the reference device via increasing the first transmit power, such that the communication quality between the first electronic device 10 and the second electronic device 11 can be improved.

Based on the third embodiment and the fourth embodiment, if the first communication quality is between the first quality threshold and the second quality threshold, the first communication quality may be determined to have a medium quality.

Likewise, in the embodiments where the first variation of the first motion data is characterized by the standard deviation of the first motion data, if the standard deviation of the first motion data indicates that the first variation of the first motion data is between the first variation threshold and the second variation threshold, the first motion data may be determined to have medium variation.

In response to determining that the first communication quality is between the first quality threshold and the second quality threshold and the first variation of the first motion data is between the first variation threshold and the second variation threshold, the processor 104 may maintain the first transmit power of the reference device.

That is, if the first communication quality is a medium quality and the first motion data has medium variation, it may represent that the power consumption of the reference device and the communication quality between the first electronic device 10 and the second electronic device 11 are proper. In this case, the processor 104 may manage the first transmit power of the reference device via maintaining the first transmit power, such that the communication quality between the first electronic device 10 and the second electronic device 11 can be maintained.

In one embodiment, the management of the first transmit power may be organized as the following Table 1.

**Table 1**

| First communication quality | First transmit power management |
|---|---|
| Firs variation of the first motion data | |
| 1. first communication quality has high quality | Decreasing |
| 2. first motion data has low variation | |
| 1. first communication quality has medium quality | Maintaining |
| 2. first motion data has medium variation | |
| 1. first communication quality has low quality | Increasing |
| 2. first motion data has high variation | |

In a fifth embodiment, in response to determining that the first communication quality is worse than the second quality threshold and the first variation of the first motion data is lower than the first variation threshold, it represents that the first communication quality is a low quality and the first motion data has low variation. In this case, it may imply that the communication path between the first electronic device 10 and the second electronic device 11 has been occluded.

In this case, the processor 104 may increase the first transmit power of the reference device to attempt to improve the communication quality between the first electronic device 10 and the second electronic device 11.

In the embodiments where the reference device is assumed to be the second electronic device 11, after managing the first transmit power of the reference device, the first electronic device 10 may further receive, from the reference device, other signals sent by using the managed first transmit power, but the disclosure is not limited thereto.

In the embodiments of the disclosure, in response to determining that the first transmit power of the reference device has been managed (e.g., decreasing/increasing/maintained), the processor 104 may obtain the first communication quality and the first motion data again, and accordingly managing the first transmit power again. That is, the processor 104 may repeatedly perform steps S210 to S230, but the disclosure is not limited thereto.

In one embodiment, in response to determining that the first communication quality is not managed to be between the first quality threshold and the second quality threshold after the first transmit power has been consecutively increased or decreased for a predetermined times, the processor 104 may stop managing the first transmit power at least for a predetermined time length, wherein the predetermined times and/or the predetermined time length can be determined based on the requirements of the designer.

That is, if the first communication quality cannot be adjusted to be the medium quality after the first transmit power has been consecutively increased or decreased for the predetermined times, it may represent that it is useless to achieve a better communication quality via adjusting the first transmit power of the reference device, and hence the processor 104 may stop managing the first transmit power at least for the predetermined time length. In this case, the power consumption of the first electronic device 10 can be reduced.

From another perspective, the reason why it is useless to achieve a better communication quality via adjusting the first transmit power of the reference device may be because the communication path between the first electronic device 10 and the second electronic device 11 has been occluded. Therefore, in response to determining that the first communication quality cannot be adjusted to be the medium quality after the first transmit power has been consecutively increased or decreased for the predetermined times, the processor 104 may provide a hint message to remind (the user) to move at least one of the first electronic device 10 and the second electronic device 11. In this case, the communication path between the first electronic device 10 and the second electronic device 11 may be not occluded, such that the processor 104 may improve the communication quality via adjusting the first transmit power of the reference device, but the disclosure is not limited thereto.

In another embodiment, in response to determining that the first communication quality has been managed to be between the first quality threshold and the second quality threshold, the processor 104 may stop managing the first transmit power at least for a predetermined time length.

That is, if the first communication quality has been adjusted to be the medium quality, the processor 104 may stop managing the first transmit power at least for the predetermined time length. In this case, the power consumption of the first electronic device 10 can be reduced.

In addition, in some embodiments, the managed first transmit power may be stored for future usage. For example, if the first transmit power has been manged to make the first communication quality the medium quality in the process of the user experiencing the visual content of a particular application (e.g., a VR application), the first transmit power can be stored in the setting of the particular application. In this case, when the particular applicant is launched again, the processor 104 does not have to perform the above management again, but can directly use the stored first transmit power to control the second electronic device 11 or other electronic devices having similar configuration with the second electronic device 11, but the disclosure is not limited thereto.

In the embodiments where the reference device is assumed to be the second electronic device 11, the operations performed in the above embodiments can be understood as the first electronic device 10 managing the first transmit power of the second electronic device 11 according to the first motion data of the second electronic device 11 and the first communication quality. Since the communication between the first electronic device 10 and the second electronic device 11 is bidirectional, the first electronic device 10 can use the similar strategy to manage its own transmit power (referred to as a reference transmit power). That is, the processor 104 may manage the reference transmit power of the first electronic device 10 according to the first motion data of the reference device and the first communication quality.

The details of the managing the reference transmit power may be referred to the mechanisms of managing the first transmit power, which would not be repeated herein.

In other embodiments where other electronic devices are connected with the first electronic device 10, the processor 104 may use the above strategy to manage the transmit power of the other electronic devices.

For example, for a third electronic device among the other electronic devices, the processor 104 may obtain a second communication quality between the first electronic device 10 and a third electronic device; obtaining a second motion data of the third electronic device; and managing a second transmit power of the third electronic device according to the second motion data and the second communication quality.

The details of the managing the second transmit power of the third electronic device may be referred to the mechanisms of managing the first transmit power, which would not be repeated herein.

In this case, the transmit power of each of the electronic devices connected to the first electronic device 10 can be properly managed, such that the interference between the electronic devices can be mitigated. Accordingly, the communication quality of the first electronic device 10 and each of the electronic devices connected to the first electronic device 10 can be guaranteed.

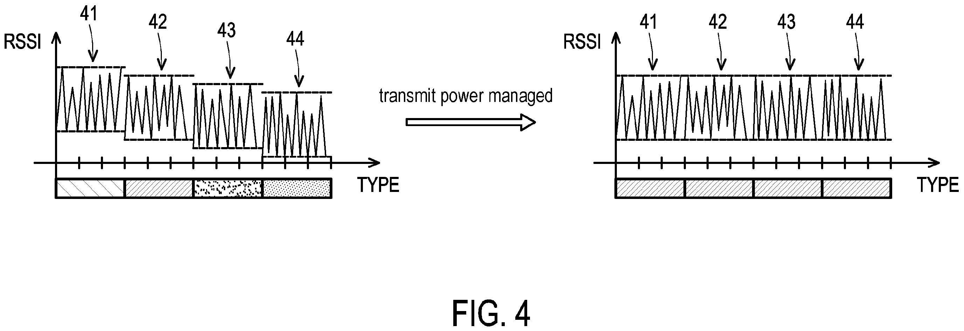

See FIG. 4, which shows a schematic diagram of the resulted RSSIs of the electronic devices connected with the first electronic device according to an embodiment of the disclosure.

In FIG. 4, it is assumed that there are four other electronic devices connected with the first electronic device 10, and the associated communication qualities determined in step S210 may be characterized by RSSIs 41 to 44 on the left side of FIG. 4.

In the embodiment, the vertical axis in FIG. 4 corresponds to the variation of RSSI, and the horizontal axis in FIG. 4 corresponds to the types of the corresponding communication qualities, wherein different types of the communication qualities may be characterized by different type patterns. For example, the RSSI 41 characterized by the type pattern of back slash lines (i.e., "\") may have a higher average RSSI than the RSSI 42 characterized by the type pattern of slash lines (i.e., "/"), and the RSSI 42 characterized by the type pattern of slash lines (i.e., "I") may have a higher average RSSI than the RSSI 43 characterized by the type pattern of non-uniform dots. In addition, the RSSI 43 characterized by the type pattern of non-uniform dots may have a higher average RSSI than the RSSI 44 characterized by the type pattern of uniform dots, but the disclosure is not limited thereto.

After managing the transmit power of each of the four electronic devices based on the above embodiments, the resulted RSSIs 41 to 44 shown on the right side of FIG. 4 can be more consistent (e.g., all RSSIs 41 to 44 are characterized by the type pattern of slash lines (i.e., "I")), which represents that the interferences between the four electronic devices have been mitigated.

In addition, although the above embodiments are discussed under the assumption where the reference device is the second electronic device 11, the solution provided by the embodiments of the disclosure may be also applied to the embodiments where the reference device is the first electronic device 10. That is, the first electronic device 10 (e.g., a wearable device) may manage its own transmit power based on the first communication quality between the first electronic device 10 and the second electronic device 11 (e.g., the HMD) and the first motion data of the first electronic device 10.

In this case, the first communication quality may be measured by the second electronic device 11, and the first electronic device 10 may obtain the first communication quality measured by the second electronic device 11 via receiving the first communication quality from the second electronic device 11. In addition, the first electronic device 10 can obtain the first motion data by using its own motion detection circuit to perform the associated motion detection.

Afterwards, the first electronic device 10 can manage its own first transmit power accordingly, and transmit other signals by using the managed first transmit power. In addition, after managing the its own first transmit power, the first electronic device 10 may further transmit, to the second electronic device 11, other signals by using the managed first transmit power, but the disclosure is not limited thereto.

The details may be referred to the above embodiments, which would not be repeated herein.

The disclosure further provides a computer readable storage medium for executing the power management method. The computer readable storage medium is composed of a plurality of program instructions (for example, a setting program instruction and a deployment program instruction) embodied therein. These program instructions can be loaded into the first electronic device 10 and executed by the same to execute the power management method and the functions of the host 200 described above.

In summary, the embodiments of the disclosure provide a solution to manage the transmit power of at least one of the first electronic device and the second electronic device, such that the interferences can be mitigated, the power consumption can be reduced and/or the communication quality can be improved.

It will be apparent to those skilled in the art that various modifications and variations can be made to the structure of the present invention without departing from the scope or spirit of the disclosure. In view of the foregoing, it is intended that the present disclosure cover modifications and variations of this invention provided they fall within the scope of the following claims and their equivalents.

## Claims

1. A power management method, executed by a first electronic device, comprising:
obtaining, by the first electronic device, a first communication quality between the first electronic device and a second electronic device;
obtaining, by the first electronic device, a first motion data of a reference device among the first electronic device and the second electronic device; and
managing, by the first electronic device, a first transmit power of the reference device among the first electronic device and the second electronic device according to the first motion data of the reference device and the first communication quality.

2. The method according to claim 1, wherein the first communication quality comprises at least one of a received signal strength indicator and a data drop rate.

3. The method according to claim 1, wherein the first motion data comprises an inertia measurement unit (IMU) data associated with the reference device.

4. The method according to claim 1, wherein managing the first transmit power of the reference device among the first electronic device and the second electronic device according to the first motion data of the reference device and the first communication quality comprises:
in response to determining that the first communication quality is better than a first quality threshold and a first variation of the first motion data is lower than a first variation threshold, decreasing the first transmit power of the reference device;
in response to determining that the first communication quality is worse than a second quality threshold and the first variation of the first motion data is higher than a second variation threshold, increasing the first transmit power of the reference device, wherein the first quality threshold is better than the second quality threshold, and the first variation threshold is lower than the second variation threshold.

5. The method according to claim 1, wherein managing the first transmit power of the reference device among the first electronic device and the second electronic device according to the first motion data of the reference device and the first communication quality comprises:
in response to determining that the first communication quality is between a first quality threshold and a second quality threshold and a first variation of the first motion data is between a first variation threshold and a second variation threshold, maintaining the first transmit power of the reference device.

6. The method according to claim 1, wherein managing the first transmit power of the reference device among the first electronic device and the second electronic device according to the first motion data of the reference device and the first communication quality comprises:
in response to determining that the first communication quality is worse than a second quality threshold and a first variation of the first motion data is lower than a first variation threshold, increasing the first transmit power of the reference device.

7. The method according to claim 1, wherein before determining the first communication quality between the first electronic device and the second electronic device, the method further comprises:
determining a first initial transmit power of the reference device based on a first relative position between the first electronic device and the second electronic device.

8. The method according to claim 1, wherein one of the first electronic device and the second electronic device is a host device, another of the first electronic device and the second electronic device is a wearable device, and before determining the first communication quality between the first electronic device and the second electronic device, the method further comprises:
requesting a user wearing the wearable device to maintain a predetermined posture for a predetermined duration;
determining a received signal quality associated with the wearable device within the predetermined duration; and
determining a first initial transmit power of the wearable device based on the received signal quality, wherein the first initial transmit power is negatively related to the received signal quality associated with the wearable device.

9. The method according to claim 1, wherein the reference device is the second electronic device.

10. The method according to claim 9, further comprising:
managing, by the first electronic device, a reference transmit power of the first electronic device according to the first motion data of the reference device and the first communication quality.

11. The method according to claim 9, further comprising:
obtaining a second communication quality between the first electronic device and a third electronic device;
obtaining a second motion data of the third electronic device; and
managing a second transmit power of the third electronic device according to the second motion data and the second communication quality.

12. The method according to claim 1, wherein the reference device is the first electronic device.

13. A first electronic device, comprising:
a non-transitory storage circuit, storing a program code; and
a processor, coupled to the non-transitory storage circuit and accessing the program code to perform:
obtaining a first communication quality between the first electronic device and a second electronic device;
obtaining a first motion data of a reference device among the first electronic device and the second electronic device; and
managing a first transmit power of the reference device among the first electronic device and the second electronic device according to the first motion data of the reference device and the first communication quality.

14. A non-transitory computer readable storage medium, the computer readable storage medium recording an executable computer program, the executable computer program being loaded by a first electronic device to perform steps of:
obtaining a first communication quality between the first electronic device and a second electronic device;
obtaining a first motion data of a reference device among the first electronic device and the second electronic device; and
managing a first transmit power of the reference device among the first electronic device and the second electronic device according to the first motion data of the reference device and the first communication quality.
